(19) Europäisches Patentamt
European Patent Office
Office européen des brevets

(11) Publication number: 0 202 542
A1

(12) # EUROPEAN PATENT APPLICATION

(21) Application number: 86106248.7

(22) Date of filing: 07.05.86

(51) Int. Cl.[4]: C 08 G 77/38
C 08 G 77/48

(30) Priority: 07.05.85 JP 97632/85
30.05.85 JP 118445/85

(43) Date of publication of application:
26.11.86 Bulletin 86/48

(84) Designated Contracting States:
DE FR GB

(71) Applicant: SUMITOMO ELECTRIC INDUSTRIES LIMITED
No. 15, Kitahama 5-chome Higashi-ku
Osaka-shi Osaka 541(JP)

(72) Inventor: Kohjiva, Shinzo
6-7-506, Ohnawaba-cho 6-chome Umezu
Ukyo-ku Kyoto-shi Kyoto-fu(JP)

(72) Inventor: Yamashita, Shinzo
28, Nishiiori-cho Kitashirakawa
Sakyo-ku Kyoto-shi Kyoto-fu(JP)

(72) Inventor: Uemiya, Takafumi Osaka Works of Sumitomo Electric Industries, Ltd. 1-3, Shimaya 1-chome
Konohana-ku Osaka-shi Osaka-fu(JP)

(72) Inventor: Osawa, Yoshitaka Osaka Works of Sumitomo Electric Industries, Ltd. 1-3, Shimaya 1-chome
Konohana-ku Osaka-shi Osaka-fu(JP)

(72) Inventor: Niwa, Shin-ichiro Osaka Works of Sumitomo Electric Industries, Ltd. 1-3, Shimaya 1-chome
Konohana-ku Osaka-shi Osaka-fu(JP)

(72) Inventor: Nishimura, Akira Osaka Works of Sumitomo Electric Industries, Ltd. 1-3, Shimaya 1-chome
Konohana-ku Osaka-shi Osaka-fu(JP)

(72) Inventor: Shibata, Yutaka Osaka Works of Sumitomo Electric Industries, Ltd. 1-3, Shimaya 1-chome
Konohana-ku Osaka-shi Osaka-fu(JP)

(74) Representative: Lehn, Werner, Dipl.-Ing. et al,
Hoffmann, Eitle & Partner Patentanwälte Arabellastrasse 4 (Sternhaus)
D-8000 München 81(DE)

(54) **Liquid optical siloxane polymer.**

(57) A liquid optical siloxane polymer having a group for modifying a refractive index of the polymer which is introduced in a side chain of the polymer by a hydrosilyl reaction of one of following systems:

(A) a compound having a carbon-carbon unsaturated bond and a group for modifying a refractive index, and a siloxane polymer having a silicon hydride group, and

(B) a compound having a silicon hydride group and a group for modifying a refractive index, and a siloxane polymer having a carbon-carbon unsaturated bond, the refractive index of which polymer is easily and precisely modified.

# LIQUID OPTICAL SILOXANE POLYMER

## FIELD OF THE INVENTION

The present invention relates to a liquid optical siloxane polymer which is easily processed and has a controlled refractive index. More particularly, it relates to a liquid siloxane polymer a refractive index of which is easily and precisely modified by introducing a group for changing the refractive index as a side chain of the siloxane polymer.

## BACKGROUND OF THE INVENTION

Hitherto, glass is widely and largely used as an optical material since it has a variety of the refractive indexes and dispersion value. However, glass has several drawbacks. For example, the refractive index of glass is large and any glass with a low refractive index and large dispersion has not been produced. Since glass has poor processability, the production of an unsymmetric lens costs much. Glass has large specific gravity. In addition, glass is hard and fragile.

As an economical optical material with good processability, there are known plastics such as polymethyl methacrylate and polystyrene. However, the number of practically useful plastic optical materials is not large. Further, the plastic optical material has poor heat resistance and/or flexibility. It is not easy to produce an

article of a complicated shape from the plastic optical material.

A liquid optical siloxane polymer is an attractive optical material, since it has not only good processability but also good transparency and heat resistance, and rubbery elasticity after cross-linked.

One known method for modifying the refractive index of the liquid optical siloxane polymer comprises homo- or co-polymerizing a cyclic siloxane monomer having a phenyl group to produce methylphenylsiloxane polymer, dimethylsiloxane/methylphenylsiloxane copolymer and the like. In this method, the refractive index of the resulting polymer is modified by changing the content of the phenyl groups. That is, the polymerization is carried out by changing the amount of the cyclic siloxane monomer having the phenyl group.

However, this conventional method has several drawbacks such that:

1. Since the refractive index is modified by the content of the phenyl group, the refractive index can not be changed beyond a certain range.

2. Since preparation and purification of the siloxane monomer having the phenyl group is rather difficult, it is very expensive to produce a monomer which is pure enough to be used as an optical material.

3. Trial and error polymerization is required to precisely control the refractive index of the siloxane polymer by the use of the siloxane monomer having the phenyl group.

4. In order to provide several kinds of siloxane polymers having different refractive indexes, it is necessary to produce polymers with varying the kind and/or the amount of the comonomer to be copolymerized. This is troublesome in view of quality control and investory control.

## SUMMARY OF THE INVENTION

One object of the present invention is to provide a liquid optical siloxane polymer having a wide variety of refractive indexes.

Another object of the present invention is to provide a liquid optical siloxane polymer a refractive index of which is easily and precisely modified.

These and other objects are accomplished by a liquid optical siloxane polymer having a group for modifying a refractive index of the polymer which is introduced in a side chain of the polymer by a hydrosilyl reaction of one of following systems:

(A) a compound having a carbon-carbon unsaturated bond and a group for modifying a refractive index, and a siloxane polymer having a silicon hydride group, and

(B) a compound having a silicon hydride group and a group for modifying a refractive index, and a siloxane polymer having a carbon-carbon unsaturated bond.

BRIEF DESCRIPTION OF THE DRAWINGS

Fig. 1 shows the NMR spectrum of the siloxane polymer No. 1 obtained in Example 1,

Fig. 2 shows the NMR spectrum of the siloxane polymer No. 1 obtained in Example 2,

Fig. 3 shows the NMR spectrum of the siloxane polymer No. 3 obtained in Example 3,

Fig. 4 shows the NMR spectrum of the siloxane polymer No. 3 obtained in Example 4,

Fig. 5 is a graph showing the relationship between the refractive index and the glass transition temperature, and

Fig. 6 is a graph showing the relationship between the refractive index and Abbe's number.

DETAILED DESCRIPTION OF THE INVENTION

According to the present invention, the compound having the group for modifying the refractive index is reacted with the siloxane polymer so as to introduce a required amount of the group for modifying the refractive index in the side chain of the polymer by the hydrosilyl reaction.

When the siloxane polymer has an excessive number of the sites which react with the compound having the group

for modifying the refractive index, the polymer having various refractive indexes can be produced from one kind of the siloxane polymer by changing the amount of the compound having the group for modifying the refractive index to be reacted with the unmodified siloxane polymer.

The hydrosilyl reaction is a reaction of the silicon hydride group and the carbon-carbon unsaturated group represented by the following reaction scheme:

$$\equiv SiH + {>}C{=}C{<} \rightarrow \equiv Si-\underset{|}{\overset{|}{C}}-\underset{|}{\overset{|}{C}}-H$$

The carbon-carbon unsaturated group includes a vinyl group, an allyl group, an isopropenyl group and the like. Among them, the vinyl group is preferred.

According to the present invention, the group for modifying the refractive index is introduced by the hydrosilyl reaction of one of two systems.

In the first system (A), the compound having the group for modifying the refractive index has also the carbon-carbon unsaturated group, while the siloxane polymer has the silicon hydride group.

In this system, the siloxane polymer may have the following chemical formula:

$$-(\underset{\underset{R_1}{|}}{\overset{\overset{H}{|}}{Si}}-O)_x-(\underset{\underset{R_3}{|}}{\overset{\overset{R_2}{|}}{Si}}-O)_y- \qquad (I)$$

wherein $R_1$ is a hydrogen atom or a $C_1$-$C_{12}$ alkyl or alkoxy group; $R_2$ and $R_3$ are, the same or different, each a $C_1$-$C_{12}$ alkyl or alkoxy group; and x and y are each a positive integer. Preferably, the alkyl or alkoxy group is a $C_1$-$C_3$ alkyl or alkoxy group. Specific examples of them are methyl, ethyl, methoxy and ethoxy. Among them, methyl is preferred. The siloxane polymer has such a molecular weight that it is in a liquid state at a room temperature, for example, 1,000 to 1,000,000, preferably 5,000 to 300,000.

The compound having the group for modifying the refractive index and the carbon-carbon unsaturated group may be represented by the following chemical formula:

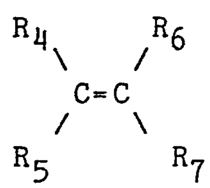

(II)

As described in the above, examples of the unsaturated bond are the vinyl group, the allyl group and the isopropenyl group.

$R_4$, $R_5$, $R_6$ and $R_7$ are the same or different and each a $C_1$-$C_3$ alkyl or alkoxy group, a $C_3$-$C_8$ cycloalkyl group, an aromatic group, and the like. These groups may be fluorinated. At least one of them should be the group for modifying the refractive index. Specific examples of the compound (II) are styrene, α-methylstyrene, 2-vinylnaphthalene, 9-vinylanthracene, perfluorooctylethylene and the like.

The group for modifying the refractive index of the siloxane polymer may be an aromatic group or a halogenated hydrocarbon group including a perfluorocarbon group. For increasing the refractive index, the aromatic groups such as phenyl, naphthyl, anthryl, pyrenyl and the like are preferred. For decreasing the refractive index of the siloxane polymer, the halogenated hydrocarbon groups particularly fluorocarbon groups such as a trifluoropropyl group are preferred.

In the second system (B), the compound having the group for modifying the refractive index also has the silicone hydride group, while the siloxane polymer has the carbon-carbon unsaturated group.

In this system, the siloxane polymer may have the following chemical formula:

$$-(\overset{R_1'}{\underset{R_2'}{\mid \atop Si \atop \mid}}-O)_x-(\overset{R_3'}{\underset{R_4'}{\mid \atop Si \atop \mid}}-O)_y- \qquad \text{(III)}$$

wherein $R_1'$, $R_2'$, $R_3'$ and $R_4'$ are, the same or different, a a $C_1$-$C_{12}$ alkyl or alkoxy group with the proviso that at least one of them is the carbon-carbon unsaturated group or a group containing said unsaturated group; and x and y are the same as defined above. Preferably, the alkyl or alkoxy group is a $C_1$-$C_3$ alkyl or alkoxy group. Preferably, the both chain terminals of the polymer are blocked by the carbon-carbon unsaturate groups.

Examples of the compound having the group for modifying the refractive index and the silicon hydride group may be represented by the following chemical formula:

$$\begin{array}{l} \quad\;\; R_5' \\ \quad\;\, / \\ H-Si-R_6' \\ \quad\;\, \backslash \\ \quad\;\; R_7' \end{array} \qquad (IV)$$

or

$$\begin{array}{c} R_5' \\ | \\ H-Si-O-R_7' \\ | \\ R_6' \end{array} \qquad (V)$$

wherein $R_5'$, $R_6'$ and $R_7'$ are, the same or different, an aromatic group (e.g. phenyl, naphthyl, anthryl and the like), a $C_1$-$C_8$ alkyl or alkoxy group or a $C_3$-$C_8$ cycloalkyl group with the proviso that at least one of them is the group for modifying the refractive index.

Specific examples of said silane compound (IV) are phenyldimethylsilane, diphenylmethylsilane, phenylsilane, diphenylsilane, methylphenylsilane, p-bis(dimethylsilyl)-benzene, triphenylsilane, bis[(p-dimethylsilyl)phenyl] ether, cyclohexyldimethylsilane and the like. Further, the siloxane compound (V) such as 1,3-diphenyl-1,3-dimethyl-siloxane are used.

As the compound having the group for modifying the refractive index and the silicon hydride group, used is not only a low molecular weight compound but also a siloxane polymer having not so high molecular weight produced from

the system (A). That is, by the hydrosilyl reaction of the system (A), the siloxane polymer having the group for modifying the refractive index is prepared so as to form a polymer having unreacted silicon hydride groups. Then, the unreacted silicon hydride groups are reacted with the siloxane polymer having the carbon-carbon unsaturated groups.

The siloxane polymer of the present invention may be prepared by the hydrosilyl reaction of the system (A) or (B). In this case, the prepared siloxane polymer may still has the unreacted silicon hydride or carbon-carbon unsaturated groups in the molecule. Such the unreacted groups serve to provide cross-linking sites to be used in subsequent cross linking of the polymer.

The liquid optical siloxane polymer of the present invention is in a liquid state under normal conditions. Usually, it has a molecular weight of 1,000 to 1,000,000, preferably 5,000 to 300,000.

The hydroxyl reaction according to the present invention can be carried out in a suitable solvent (e.g. benzene, toluene, methyl ethyl ketone, tetrahydrofuran and the like) in the presence or absence of a catalyst (e.g. $H_2PtCl_6$, $Na_2PtCl_6$, $PhCl(PPh_3)_3$ and the like). The reaction time is preferably 1 to 100 hours. The polymerization is usually carried out under atmospheric pressure, although it may be carried out in a sealed reactor under high pressure.

According to the present invention, since a varying amount of the group for modifying the refractive index can be introduced in the siloxane polymer, the refractive index of the siloxane polymer can be precisely controlled as desired. Since it is not necessary to prepare and polymerize a siloxane monomer having a group for modifying the refractive index, preparation of the monomer is easy, and various kinds of the group for modifying the refractive index can be introduced in the siloxane polymer. When the siloxane polymer has the unreacted silicon hydride groups and/or the unreacted carbon-carbon unsaturated groups, it can be easily cross-linked.

Presently and practically preferred embodiments of the present invention are illustrated by following examples.

Example 1

A siloxane polymer of the formula:

$$\begin{array}{ccccccc} & CH_3 & & H & & CH_3 & \\ & | & & | & & | & \\ CH_3- & Si & -(-O- & Si & -)_k-O- & Si & -CH_3 \\ & | & & | & & | & \\ & CH_3 & & CH_3 & & CH_3 & \end{array} \qquad (1)$$

($M_w$ = 2,900, $n_D^{20}$ = 1.3990)

or

$$\begin{array}{ccccccccc} & CH_3 & & H & & CH_3 & & CH_3 & \\ & | & & | & & | & & | & \\ CH_3- & Si & -(-O- & Si & -)_l-(O- & Si & -)_m-O- & Si & -CH_3 \\ & | & & | & & | & & | & \\ & CH_3 & & CH_3 & & CH_3 & & CH_3 & \end{array} \qquad (2)$$

($M_w$ = 14,000, l = 32.2 % by mole, $n_D^{20}$ = 1.4021)

and styrene were subjected to the hydrosilyl reaction at 40°C for 3 hours in the presence of a $3.8 \times 10^{-3}$ M solution of $H_2[PtCl_6]$ in isopropanol (0.1 ml). Then, the reaction product was dissolved in toluene, washed with water and precipitated with methanol to obtain a transparent liquid polymer. The reaction conditions and the properties of the product are shown in Table 1.

Table 1

| No. | Siloxane polymer | | Styrene (g) | $n_D^{20}$ | Abbe's number | $T_g$ (°C) |
|---|---|---|---|---|---|---|
| | Kind | Amount (g) | | | | |
| 1 | (1) | 5 | 10 | 1.5330 | 37.0 | -47.4 |
| 2 | (1) | 5 | 5 | 1.5120 | 37.7 | -61.1 |
| 3 | (2) | 5 | 3 | 1.4708 | 39.4 | -92.5 |
| 4 | (2) | 5 | 1 | 1.4423 | 43.9 | -110.3 |
| 5 | (2) | 5 | 0.5 | 1.4255 | 46.0 | -113.9 |

Fig. 1 shows the NMR spectrum of the siloxane polymer obtained in Example 1, No. 1. A peak corresponding to the vinyl group disappeared while peaks corresponding to the methyl, methylene and methine groups to which the silicon atom and the phenyl group are attached appear at $\delta$ = 1.3 ppm, 0.8 and 2.5 ppm, and 2.0 ppm, respectively.

Example 2

One siloxane polymer selected from the group consisting of the siloxane polymers (1) and (2) used in Example 1 and siloxane polymers of the formulas:

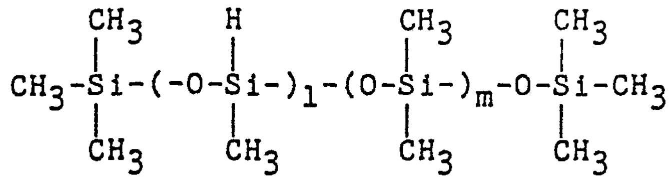

(3)

($M_w$ = 10,000, l = 13.3 % by mole, $n_D^{20}$ = 1.4033)

and

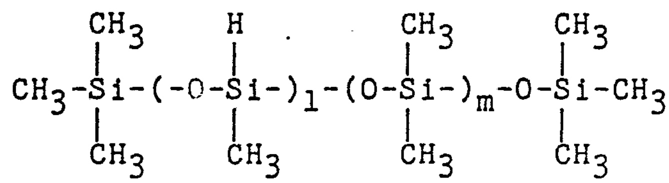

(4)

($M_w$ = 61,500, l = 2.4 % by mole, $n_D^{20}$ = 1.4056)

and 2-vinylnaphthalene were each dissolved in chloroform (10 ml). 1 ml aliquots (or 2 ml aliquots in No. 6) of the solutions were mixed and reacted at 70°C for 73 hours in the presence of a solution of $H_2[PtCl_6]$ in methanol (1 ml). The reaction product was precipitated with methanol. The precipitate was dissolved in toluene and reprecipitated with methanol to obtain a transparent liquid polymer. The reaction conditions and the properties of the product are shown in Table 2.

Table 2

| No. | Siloxane polymer | | 2-vinyl-naphthalene (g) | Concent-ration of $H_2[PtCl_6]$ (M) | $n_D^{20}$ | Abbe's number | $T_g$ (°C) |
|---|---|---|---|---|---|---|---|
| | Kind | Amount (g) | | | | | |
| 1 | (1) | 1.216 | 2.436 | $4.72x10^{-4}$ | 1.6141 | 22.5 | -13.0 |
| 2 | (2) | 4.014 | 2.783 | $1.18x10^{-3}$ | 1.5164 | 29.1 | -68.5 |
| 3 | (2) | 4.014 | 2.783 | $4.72x10^{-4}$ | 1.4989 | 31.0 | -84.7 |
| 4 | (3) | 4.571 | 2.783 | $1.18x10^{-3}$ | 1.4641 | 32.8 | -113.2 |
| 5 | (3) | 4.571 | 2.783 | $4.72x10^{-4}$ | 1.4597 | —— | -117.2 |
| 6 | (4) | 6.087 | 2.784 | $1.18x10^{-3}$ | 1.4125 | 44.9 | -123.2 |

Fig. 2 shows the NMR spectrum of the siloxane polymer obtained in Example 2, No. 1. A peak corresponding to the vinyl group disappeared while peaks corresponding to the methyl, methylene and methine groups to which the silicon atom and the naphthyl group are attached appear at δ = 1.3 ppm, 0.8 and 2.6 ppm, and 2.1 ppm, respectively.

Example 3

Perfluorooctylethylene and one of the siloxane polymers (1) to (3) used in the previous Examples were each dissolved in chloroform (10 ml) and 1 ml aliquots of two solutions were mixed with a $1.18 \times 10^{-3}$ M solution of $H_2[PtCl_6]$ in methanol (1 ml) to proceed the reaction in the same manner as in Example 2 to obtain a transparent liquid polymer.

The reaction conditions and the properties of the product are shown in Table 3.

Table 3

| No. | Siloxane polymer | | Perfluoro-octyl-ethylene (g) | $n_D^{20}$ | Abbe's number | $T_g$ (°C) |
|---|---|---|---|---|---|---|
| | Kind | Amount (g) | | | | |
| 1 | (1) | 1.145 | 8.020 | 1.3659 | 66.2 | -53.5 |
| 2 | (2) | 2.007 | 8.036 | 1.3836 | 53.2 | -114.2 |
| 3 | (3) | 4.571 | 8.036 | 1.4009 | 48.7 | -124.6 |

Fig. 3 shows the NMR spectrum of the siloxane polymer obtained in Example 3, No. 3. A peak corresponding to the methylene group to which the silicon atom and the perfluorooctyl group are attached appear around δ = 1.0 and 2.6 ppm.

Example 4

9-Vinylanthracene and one of the siloxane polymers (1) to (3) used in the previous Examples were each dissolved in chloroform (10 ml) and 1 ml aliquots of two solutions were mixed with a 4.72 x $10^{-4}$ M solution of $H_2[PtCl_6]$ in methanol (1 ml) and chloroform (1 ml) to proceed the reaction at 70°C for 118 hours and the product was recovered in the same manner as in Example 2 to obtain a transparent liquid.

The reaction conditions and the properties of the product are shown in Table 4.

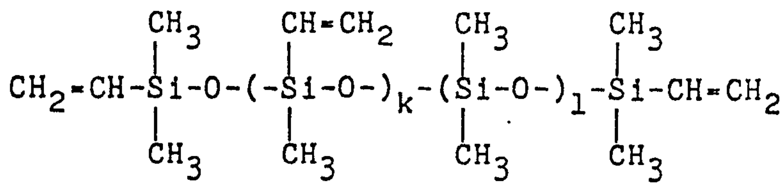

(5)

($M_w$ = 132,200, k = 24.2 %, $n_D^{20}$ = 1.416)

and phenyldimethylsilane were subjected to the hydrosilyl reaction at 50°C for 3 hours in the presence of a 3.8 x $10^{-3}$ M solution of $H_2[PtCl_6]$ in isopropanol (0.1 ml). Then, the reaction product was dissolved in toluene, washed with water and precipitated with methanol, recovered and dried to obtain a transparent liquid polymer. The reaction conditions and the properties of the product are shown in Table 5.

Table 5

| No. | Siloxane polymer (g) | Styrene (g) | $n_D^{20}$ | Abbe's number |
|---|---|---|---|---|
| 1 | 4 | 0.4 | 1.422 | 40.3 |
| 2 | 4 | 1.8 | 1.450 | 39.6 |
| 3 | 4 | 3.6 | 1.467 | 39.0 |

Example 6

A siloxane polymer (2.0 g) of the formula:

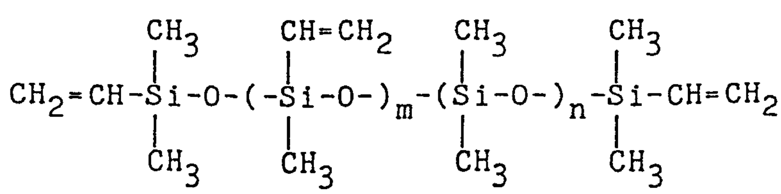

(6)

($M_w$ = 62,400, m = 19.3 %, $n_D^{20}$ = 1.413)

Table 4

| No. | Siloxane polymer | | 9-Vinyl-anthracene (g) | $n_D^{20}$ | Abbe's number | $T_g$ (°C) |
|---|---|---|---|---|---|---|
| | Kind | Amount (g) | | | | |
| 1 | (1) | 0.1485 | 0.451 | 1.6528 | —— | 12.5 |
| 2 | (1) | 0.1753 | 0.2485 | 1.5643 | 20.2 | -6.5 |
| 3 | (2) | 0.2025 | 0.1317 | 1.5056 | 24.0 | -82.2 |
| 4 | (3) | 0.3000 | 0.0946 | 1.4241 | 41.8 | -124.2 |

Fig. 4 shows the NMR spectrum of the siloxane polymer obtained in Example 4, No. 4. A peak corresponding to the methylene group to which the silicon atom and the anthryl group are attached appear around δ = 1.0 ppm.

The relationship between the refractive index and the glass transition temperature or Abbe's number is shown in Fig. 5 or Fig. 6. Form Fig. 5, it is understood that as the refractive index increases, the glass transition temperature increases but is still below a room temperature, which means that the siloxane polymer has rubbery elasticity. From Fig. 6, it is understood that the liquid siloxane polymer of the present invention has smaller Abbe's number corresponding to larger dispersion than the conventional optical plastics.

Example 5

A siloxane polymer of the formula:

and diphenylmethylsilane (2.0 g) were subjected to the hydrosilyl reaction at 70°C for 1 hour in toluene (5 ml) in the presence of a $3.8 \times 10^{-3}$ M solution of $H_2[PtCl_6]$ in isopropanol (0.5 ml). Then, the reaction product was precipitated with methanol, recovered and dried to obtain a transparent liquid polymer.

$n_D^{20}$ = 1.4771, Abbe's number = 38.8.

Example 7

The siloxane polymer (6) (2.0 g) and triphenylsilane were subjected to the hydrosilyl reaction at 70°C for 1 hour in toluene (5 ml) in the presence of a $3.8 \times 10^{-3}$ M solution of $H_2[PtCl_6]$ in isopropanol (0.5 ml). Then, the reaction product was precipitated with methanol, recovered and dried to obtain a transparent liquid polymer.

$n_D^{20}$ = 1.433, Abbe's number = 39.2.

Example 8

1,1,3,3-Tetramethyldisiloxane (1.3 g), 2-vinylnaphthalene (1.5 g), toluene (3 g) and a $3.8 \times 10^{-3}$ M solution of $H_2[PtCl_6]$ in isopropanol (0.1 ml) were thoroughly mixed to proceed the hydrosilyl reaction at 50°C for 3 hours. Then, the reaction product was mixed with the siloxane polymer (6) (2.0 g) to proceed additional hydrosilyl reaction at 50°C for 3 hours. The product was precipitated with methanol, recovered and dried to obtain a transparent liquid polymer.

$n_D^{20}$ = 1.420, Abbe's number = 39.6.

Example 9

A siloxane polymer (5.0 g) of the formula:

$$CH_3-\overset{CH_3}{\underset{CH_3}{Si}}-O-(-\overset{H}{\underset{CH_3}{Si}}-O-)_p-(\overset{CH_3}{\underset{CH_3}{Si}}-O-)_q-\overset{CH_3}{\underset{CH_3}{Si}}-CH_3 \qquad (7)$$

($M_w$ = 4,700, p = 32.2 %, $n_D^{20}$ = 1.402)

$CH_2=CHC_4F_9$ (1.0 g) and a 3.8 x $10^{-3}$ M solution of $H_2[PtCl_6]$ in isopropanol (0.1 ml) were mixed to proceed the hydrosilyl reaction at 50°C for 3 hours. Then, the reaction product was precipitated with methanol, recovered and dried to obtain a liquid polymer. The liquid polymer (0.2 g), the siloxane polymer (6) (1.0 g) and the 3.8 x $10^{-3}$ M solution of $H_2[PtCl_6]$ in isopropanol (0.05 ml) were mixed to proceed additional hydrosilyl reaction at 70°C for 1 hour. The product was precipitated with methanol, recovered and dried to obtain a transparent liquid polymer.

$n_D^{20}$ = 1.400, Abbe's number = 40.2.

CLAIMS

1. A liquid optical siloxane polymer having a group for modifying a refractive index of the polymer which is introduced in a side chain of the polymer by a hydrosilyl reaction of one of following systems:

(A) a compound having a carbon-carbon unsaturated bond and a group for modifying a refractive index, and a siloxane polymer having a silicon hydride group, and

(B) a compound having a silicon hydride group and a group for modifying a refractive index, and a siloxane polymer having a carbon-carbon unsaturated bond.

2. The liquid optical siloxane polymer according to claim 1, wherein the the compound (B) having the group for modifying the refractive index and the silicon hydride group is a hydrosilyl reaction product of the system (A) having the unreacted silicon hydride groups.

3. The liquid optical siloxane polymer according to claim 1, wherein the group for modifying the refractive index is an aromatic hydrocarbon group.

4. The liquid optical siloxane polymer according to claim 3, wherein the aromatic hydrocarbon group is one selected from the group consisting of a phenyl group, a naphthyl group, an anthryl group and a pyrenyl group.

5. The liquid optical siloxane polymer according to claim 1, wherein the group for modifying the refractive index is a halogenated hydrocarbon group.

6. The liquid optical siloxane polymer according to claim 5, wherein the halogenated hydrocarbon group is a fluorocarbon group.

Fig. 1

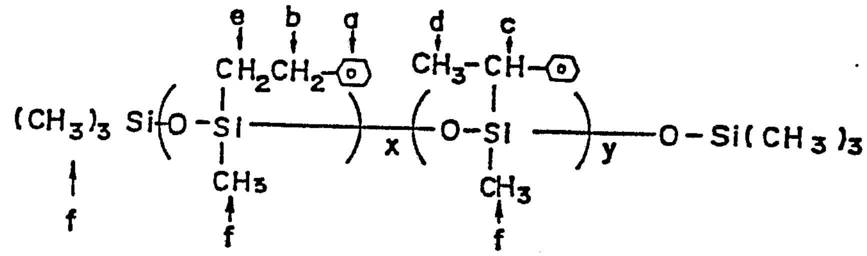

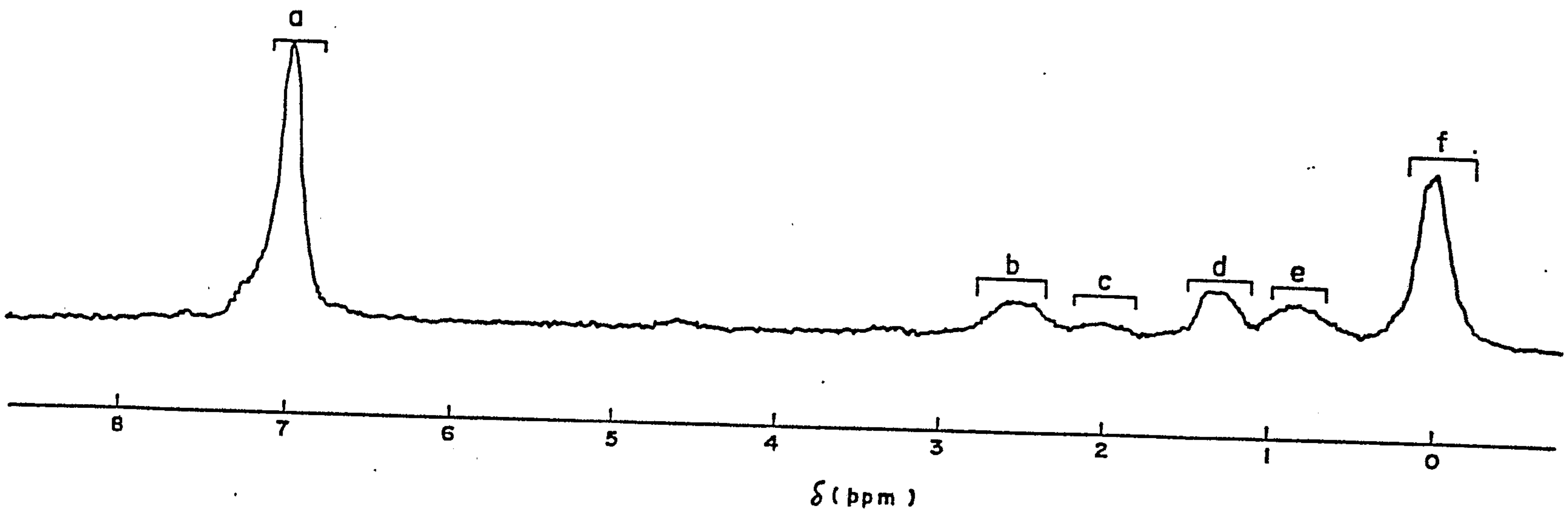

Fig. 2

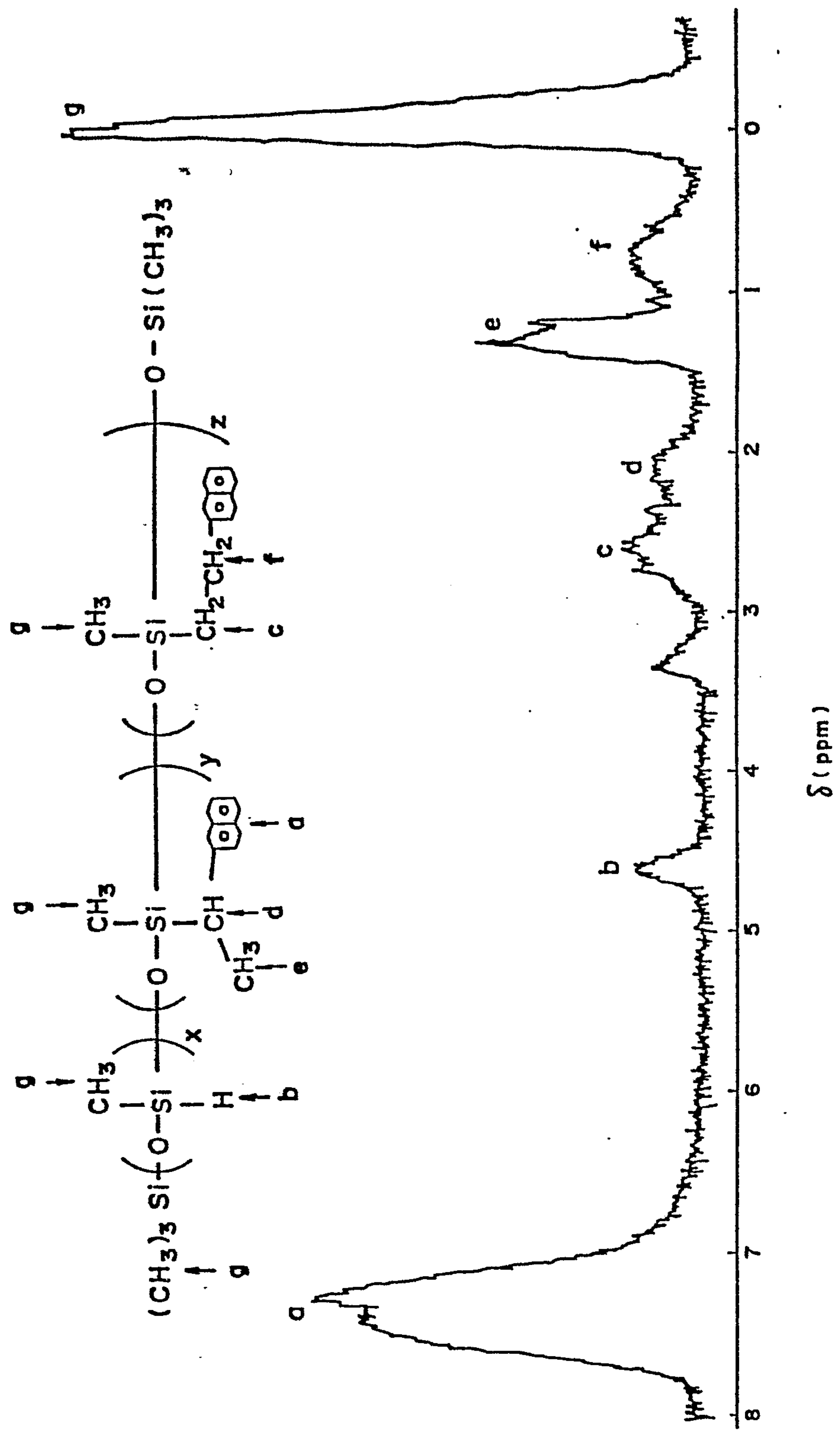

Fig. 3

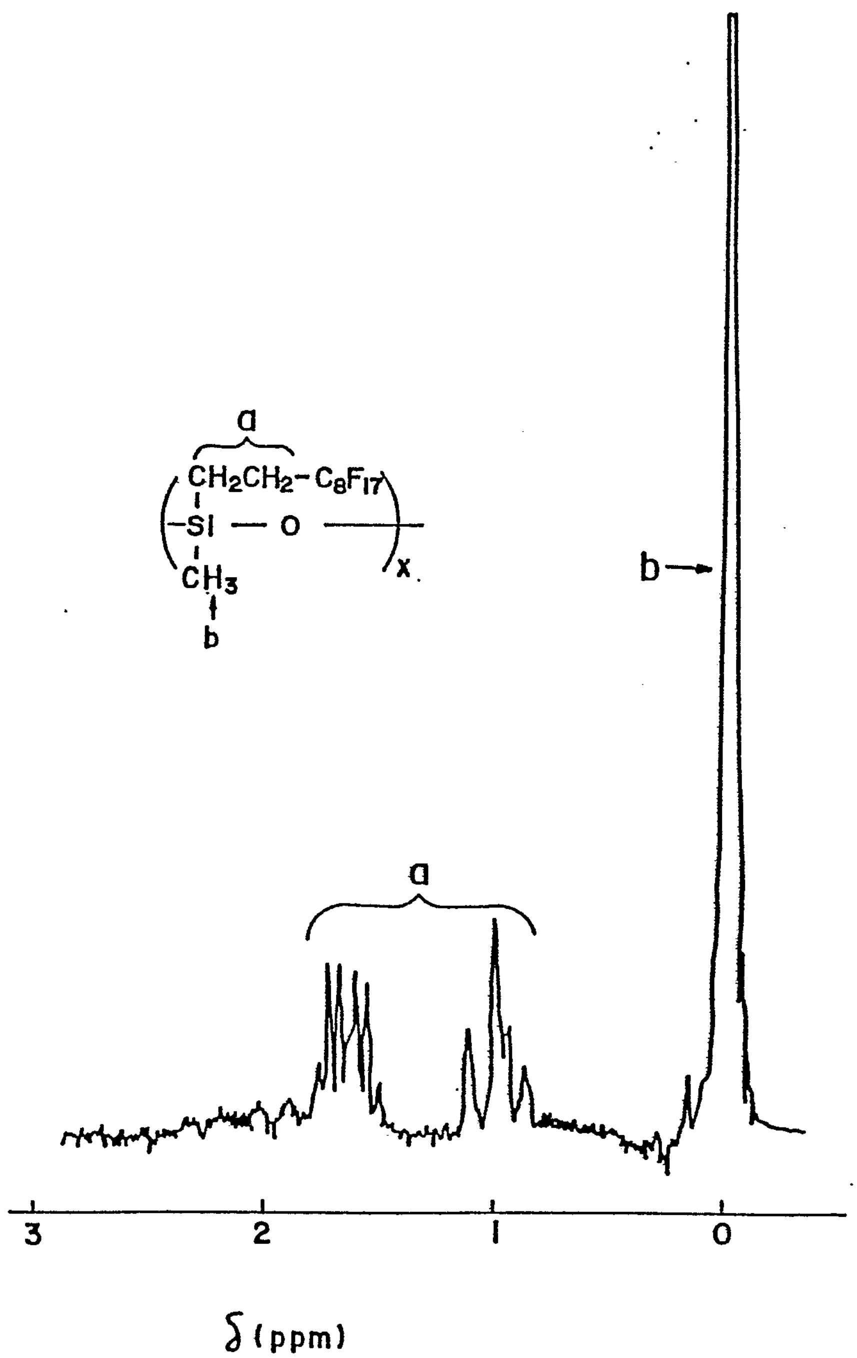

Fig. 4

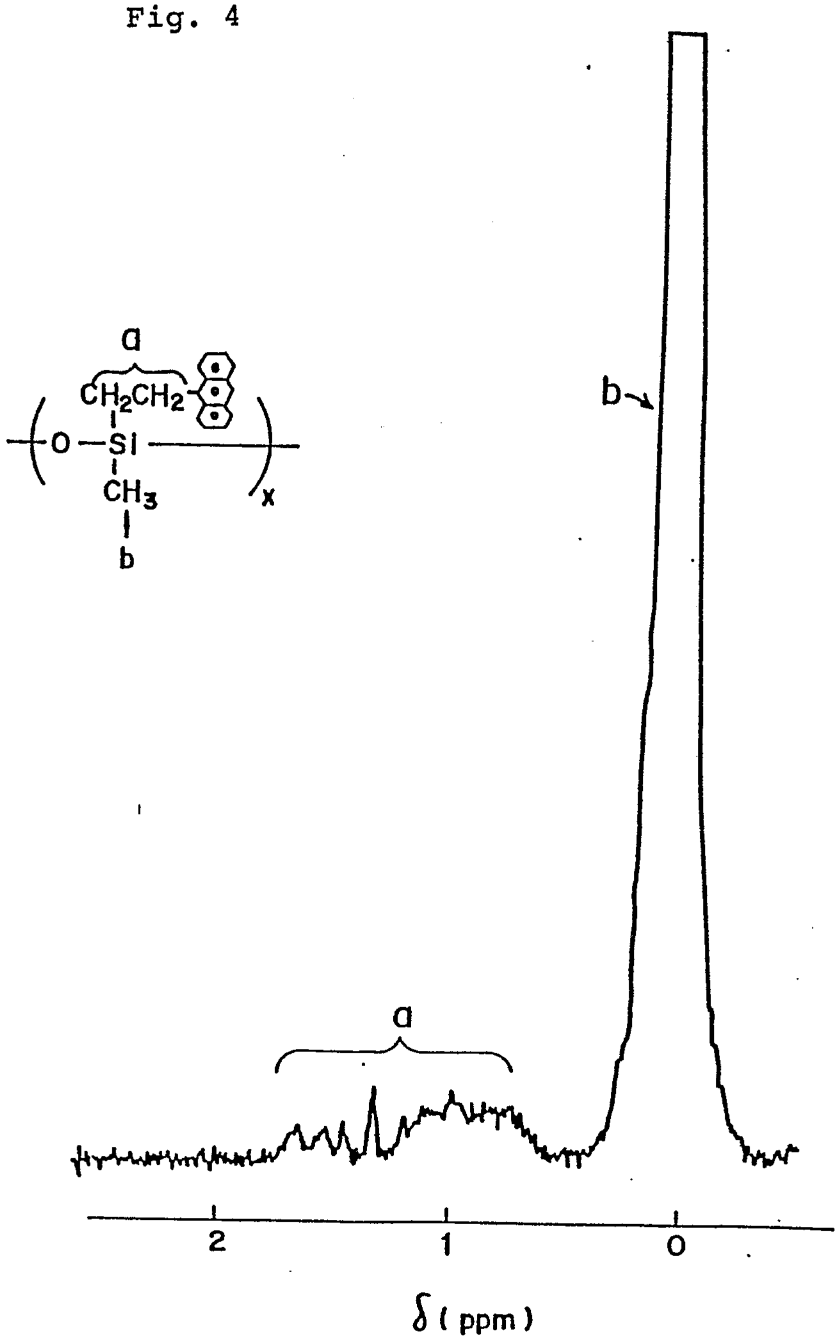

Fig. .5

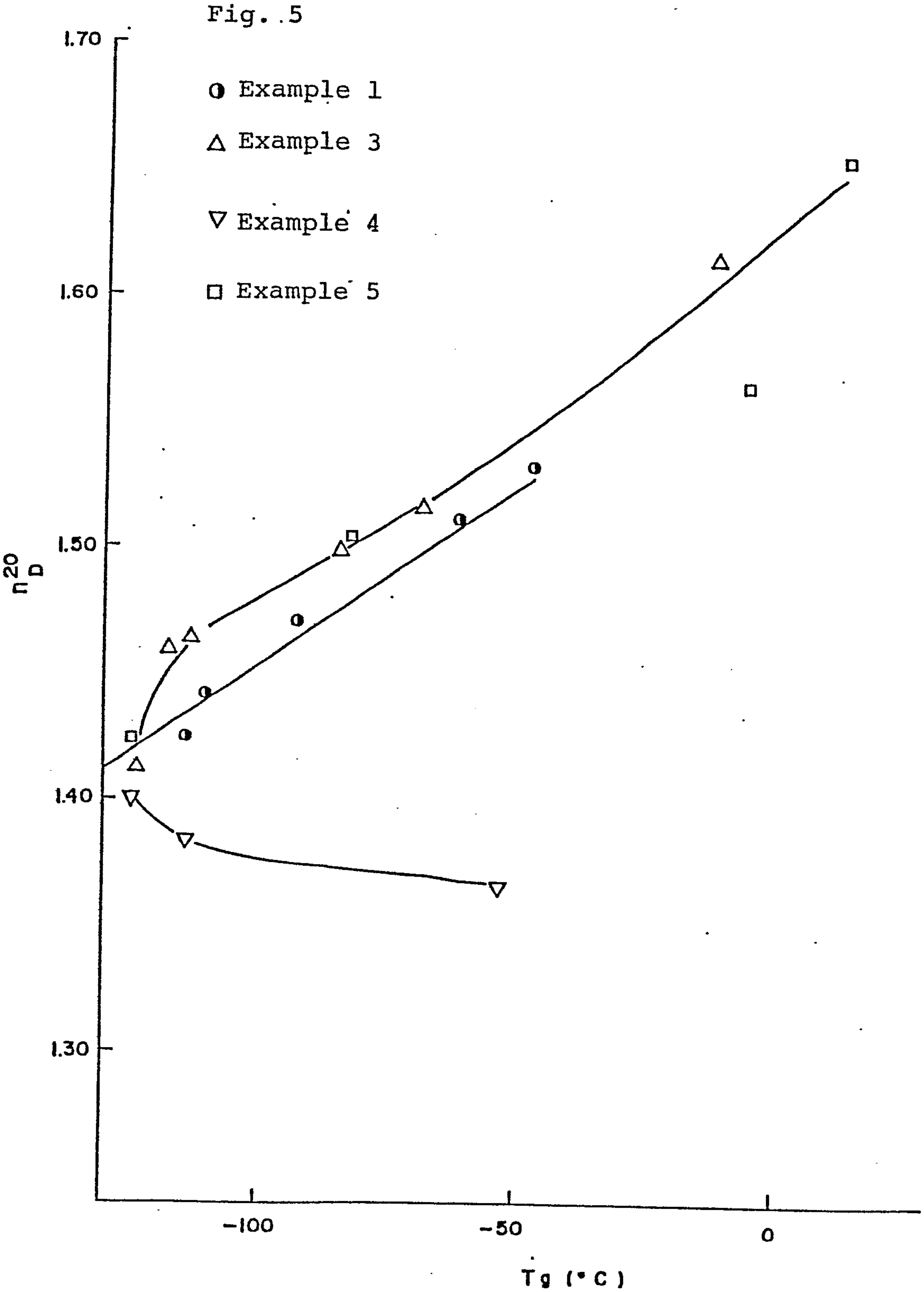

Example 1
Example 3
Example 4
Example 5
1.70
1.60
1.50
1.40
1.30
$n_D^{20}$
-100
-50
0
Tg (°C)

Fig. 6

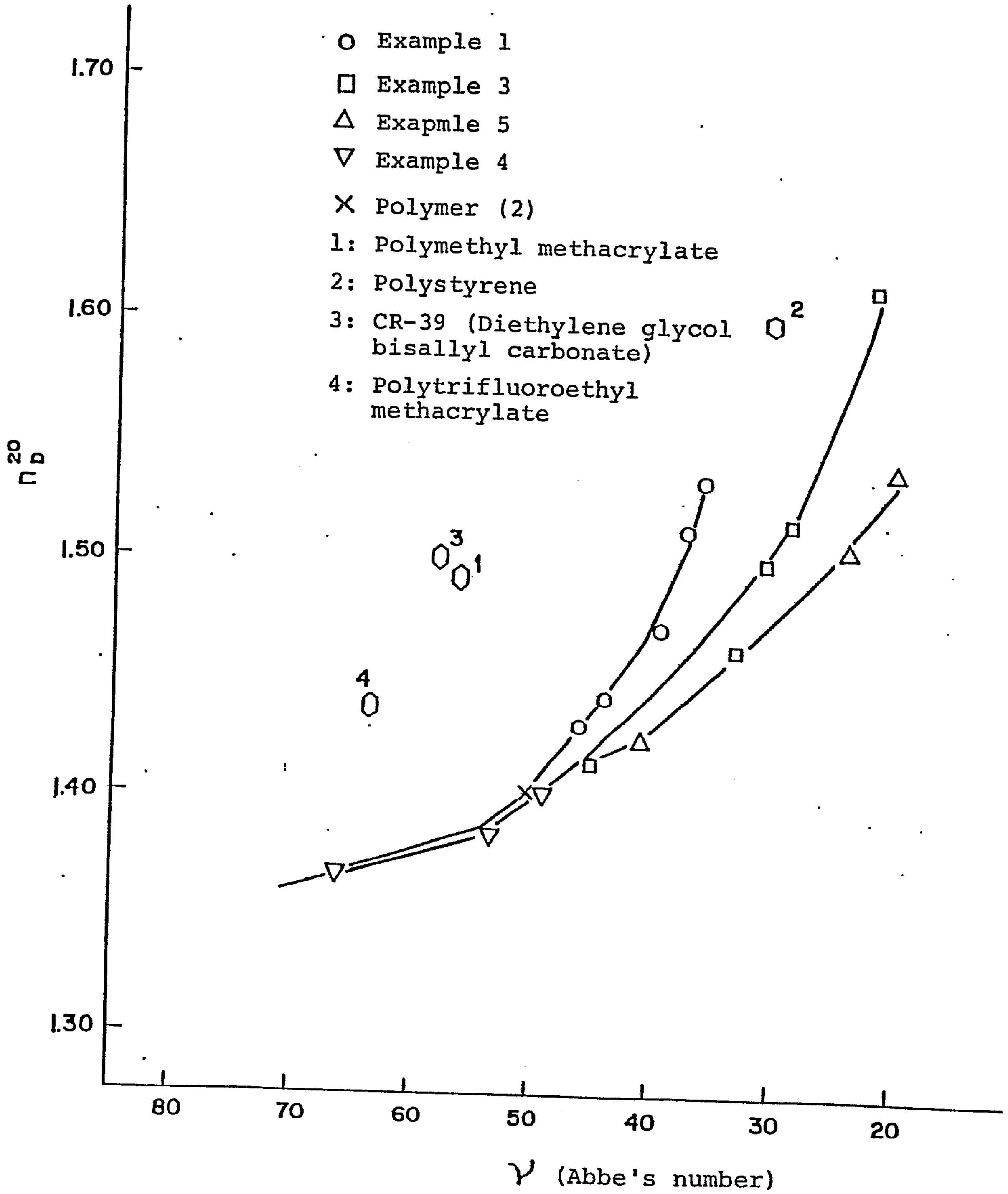
O Example 1
□ Example 3
△ Exapmle 5
▽ Example 4
× Polymer (2)
1: Polymethyl methacrylate
2: Polystyrene
3: CR-39 (Diethylene glycol bisallyl carbonate)
4: Polytrifluoroethyl methacrylate
1.70
1.60
1.50
1.40
1.30
$n_D^{20}$
80
70
60
50
40
30
20
ν (Abbe's number)

European Patent Office

# EUROPEAN SEARCH REPORT

0202542
Application number

EP 86 10 6248

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-A-2 446 818 (DOW CORNING) * Claim 1; page 5, paragraph 2 * --- | 1,3,4 | C 08 G 77/38<br>C 08 G 77/48 |
| Y | US-A-3 624 190 (J. CEKADA) * Claim 1; column 6, lines 54-69 * --- | 1,3,4 | |
| Y | US-A-3 450 736 (F.G.A. DE MONTEREY) * Claims 1,5,6 * --- | 1,3,4 | |
| Y | FR-A-1 359 431 (ICI) * Abstract, points A1,B2,B3; examples 1,3; pages 2,3 * --- | 1 | |
| Y | PATENTS ABSTRACTS OF JAPAN, vol. 8, no. 79 (P-267)[1516], 11th April 1984; & JP - A - 58 221 801 (MATSUSHITA DENKI SANGYO K.K.) 23-12-1983 * Abstract * ----- | 1 | TECHNICAL FIELDS SEARCHED (Int Cl 4)<br>C 08 G<br>B 29 D<br>G 01 B<br>C 08 L |

The present search report has been drawn up for all claims

| Place of search | Date of completion of the search | Examiner |
|---|---|---|
| THE HAGUE | 04-09-1986 | DEPIJPER R.D.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document